# FASCICULE DE BREVET EUROPEEN

(11) **EP 0 505 293 B1**
(45) Date de publication et mention de la délivrance du brevet: **27.12.1995**
(21) Numéro de dépôt: 92420079.3
(22) Date de dépôt: 16.03.1992
(51) Int. Cl.: H02M 7/5395

(54) **Système de commande d'un onduleur par modulation de largeur d'impulsion**
Pulsbreiten-moduliertes Wechselrichterssteuerungssystem
Pulse-width-modulation control system for an inverter

(30) Priorité: 18.03.1991 FR 9103463
(43) Date de publication de la demande: 23.09.1992
(73) Titulaire: SGS-THOMSON MICROELECTRONICS S.A., 94250 Gentilly (FR)
(72) Inventeur: Bourgeois, Jean-Marie, F-13830 La Bedoule (FR); Maurice, Bruno, F-13510 Eguilles (FR); Saby, Bernard, F-13090 Aix en Provence (FR)
(74) Mandataire: de Beaumont, Michel

(56) Documents cités:
- EP-A- 0 248 449
- US-A- 4 447 786
- 1988 IEEE IAS ANNUAL MEETING CONF. REC., 2 Octobre 1988, Pittsburgh US, pp. 895-902; D. VINCENTI et al.: "An On-Line PC-Based Converter PWM Modulator"

## Description

La présente invention concerne la fourniture des tensions de commande d'un onduleur destiné par exemple à alimenter à vitesse et couple réglables un moteur à induction ou à générer des tensions sinusoïdales de sortie d'une alimentation ininterruptible. Plus généralement, la présente invention prévoit un moyen pour fournir des séquences parallèles de signaux de commande à partir d'un microcontrôleur numérique.

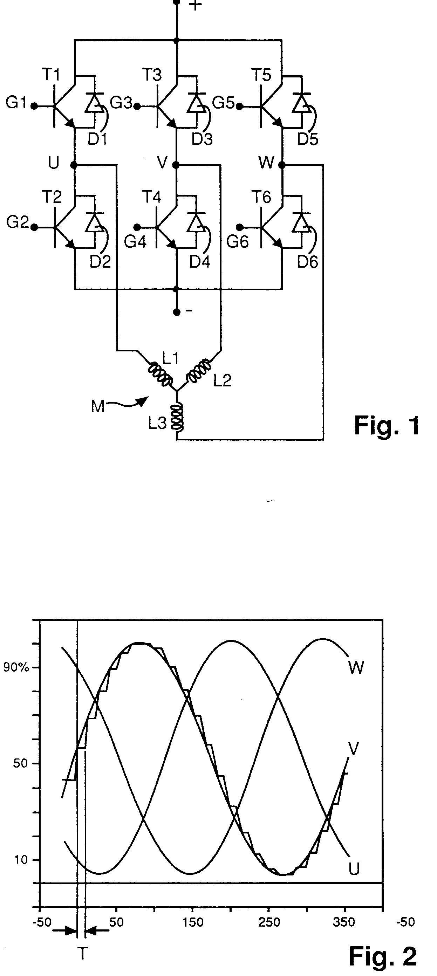

La figure 1 rappelle le schéma classique, d'un onduleur à trois branches à commande par modulation de largeur d'impulsion (PWM) pour l'alimentation d'un moteur asynchrone triphasé. Le moteur, désigné par la référence M, comprend trois enroulements inducteurs L1, L2, L3. Pour faire tourner le moteur, il convient d'appliquer à chacun de ses enroulements des tensions sinusoïdales U, V et W, mutuellement déphasées de 120°, telles que représentées en figure 2. Les tensions U, V, W sont obtenues à partir d'un onduleur comprenant six commutateurs T1 à T6, par exemple des transistors, les transistors T1-T2, T3-T4, T5-T6 étant en série entre des bornes d'alimentation positive et négative (par exemple la masse). Dans la figure 1, chacun des interrupteurs T1 à T6 est constitué d'un interrupteur de puissance associé à une diode en anti-parallèle D1 à D6. Les électrodes de commande de deux interrupteurs en série sont commandées en opposition. On arrive ainsi, par une commande convenable des bornes de commande G1 à G6 des interrupteurs T1 à T6, à fournir aux points U, V et W d'intersection des interrupteurs T1-T2, T3-T4, T5-T6 des tensions en escalier approximant des sinusoïdes. Plus particulièrement, si l'on considère les interrupteurs T1 et T2, en faisant varier leurs rapports cycliques de conduction (par exemple par paliers successifs entre 0 et 100 % ou entre 40 et 60 %), on fait varier la tension moyenne au point U par paliers successifs et on génère des sinusoïdes dont on contrôle l'amplitude. La période, NT, des sinusoïdes sera déterminée par la durée T de chacun des paliers et leur nombre N. Ce nombre N sera par exemple choisi égal à 24.

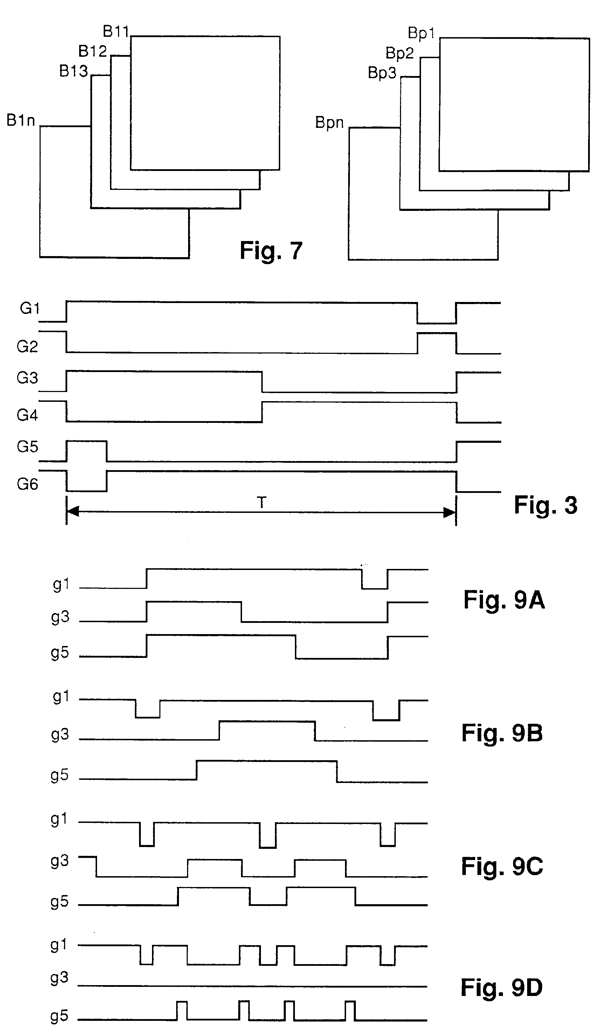

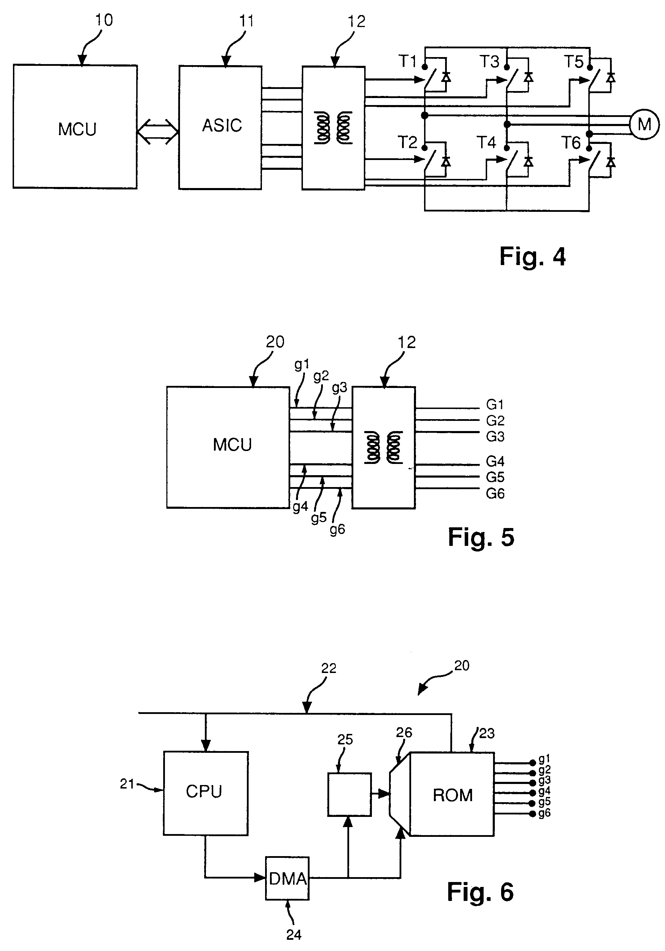

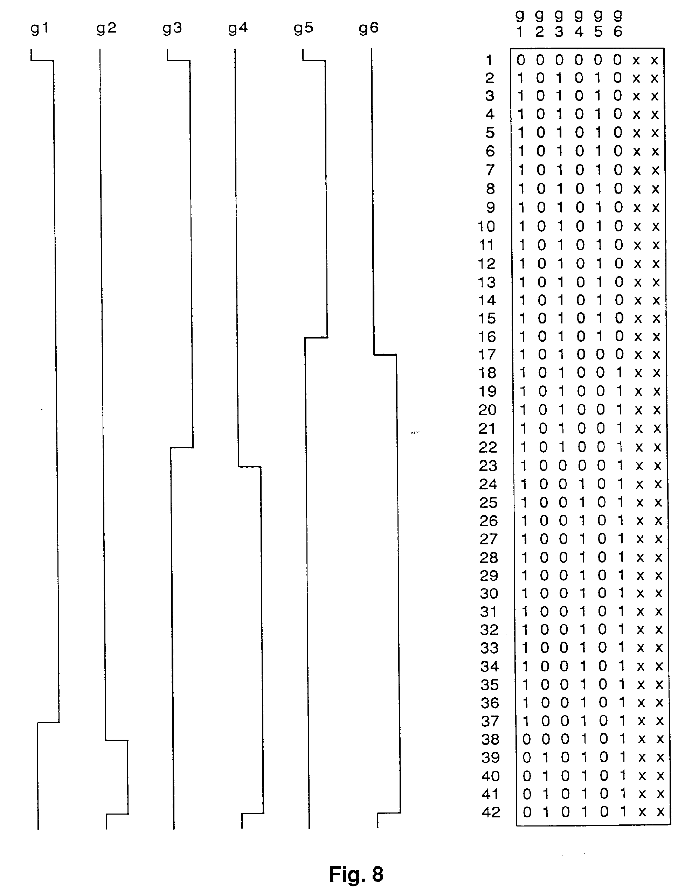

La figure 3 représente à titre d'exemple, des signaux appliqués aux bornes de commande G1 à G6 des transistors T1 à T6 pendant la durée T d'un palier. Dans cet exemple, le rapport cyclique du signal G1 est de 90%, celui du signal G3 de 50 % et celui du signal G5 de 10 %. Les rapports cycliques des signaux G2, G4, G6 sont complémentaires. Au palier suivant, la durée de ces rapports cycliques est modifiée et ainsi de suite jusqu'à l'écoulement d'une période complète (NT).

La présente invention vise tout particulièrement la façon de fournir ces suites de signaux de commande. Ce problème est par exemple traité dans l'article de Bellini et al. paru dans "International Conference on Evolution and Modern Aspects of Induction Machines - Proceedings", 8-11 juil 1986, pages 194-202. Comme cela est indiqué dans cet article, on a essayé des techniques analogiques et des techniques numériques pour fournir ces signaux.

Un système numérique classique de fourniture de ces signaux est illustré en figure 4. Il utilise essentiellement un microcontrôleur (MCU) 10 qui, pour chaque palier, fournit les valeurs des rapports cycliques des diverses branches du pont de la figure 1, c'est-à-dire que pour chaque palier, le MCU fournit trois valeurs numériques et éventuellement leurs compléments. Le microcontrôleur est suivi d'un circuit spécifique 11 (ASIC) spécialement conçu pour calculer rapidement et fournir à partir de ces valeurs, des signaux de commande du type de ceux illustrés en figure 3. Les six sorties de l'ASIC 11 sont fournies à des circuits d'interface d'amplification et d'isolement 12 qui attaquent les bornes de commande des six transistors T1 à T6.

La figure 5 illustre une utilisation connue d'un microcontrôleur pour commande d'un onduleur. Le microcontrôleur fournit directement les signaux de commande de grille g1 à g6.

Le document EP-A-0 248 449 décrit un circuit de commande direct d'onduleur, fournissant des séquences d'impulsions dont les états sont déterminés par des mots mémorisés. Si ces mots sont courts, pour ne pas encombrer la mémoire, il faut les lire à une cadence lente correspondant à la fréquence du moteur et une telle horloge n'est pas compatible avec les horloges internes d'un microprocesseur.

Pour pallier ces inconvénients, la présente invention prévoit l'utilisation d'un microcontrôleur unique fournissant directement les signaux qui jusqu'à présent étaient obtenus seulement à la sortie d'un circuit spécifique.

Ainsi, la présente invention prévoit un système de fourniture en parallèle de séquences de signaux de commande, chaque signal de commande ayant une durée déterminée constante à l'intérieur d'une séquence et un rapport cyclique prédéterminé spécifique de ce signal de commande, comportant un microcontrôleur incorporant une unité centrale, une mémoire non volatile agencée en blocs de lignes et colonnes, chaque ligne correspondant à un mot contenant au moins autant de bits qu'il y a de séquences en parallèle, chaque colonne d'un bloc ayant un rapport entre le nombre de bits à un premier état et le nombre de bits à un deuxième état correspondant audit rapport cyclique pour un signal de commande déterminé. Ce système comporte notamment des moyens d'accès direct en mémoire (DMA) associés à un compteur permettant d'adresser séquentiellement à une cadence fixée chaque mot d'un bloc et de fournir en parallèle les bits de ce mot, et le microcontrôleur est programmé pour répéter la lecture d'un bloc jusqu'à atteindre ladite durée déterminée pour un signal de commande avant de passer à la lecture répétitive d'un autre bloc, et ainsi de suite.

Selon une application de la présente invention, les signaux de commande sont destinés à un pont à plusieurs branches, chaque branche comprenant deux interrupteurs commandés en série, les deux interrupteurs d'une branche recevant des signaux sensiblement en opposition, les premiers interrupteurs de chaque branche recevant des signaux de commande dont le rapport cyclique varie entre une valeur maximale et une valeur minimale, les signaux appliqués à chaque branche étant déphasés. Ce pont est par exemple destiné à la commande d'un moteur asynchrone ou d'une alimentation ininterruptible.

Ces objets, caractéristiques et avantages ainsi que d'autres de la présente invention seront exposés en détail dans la description suivante d'un mode de réalisation particulier faite en relation avec les figures jointes parmi lesquelles :
la figure 1 représente un onduleur de commande de moteur asynchrone triphasé selon l'art antérieur ;
la figure 2 représente l'allure des tensions fondamentales de commande devant être appliquées aux enroulements du moteur ;
la figure 3 représente l'allure des signaux de commande appliqués à chacun des transistors du pont triphasé pendant un palier ;
les figures 4 et 5 représentent des systèmes de fourniture de signaux de commande selon l'art antérieur ;
la figure 6 représente très schématiquement et sous forme de blocs l'organisation du microcontrôleur utilisé selon la présente invention ;
la figure 7 illustre l'agencement en blocs de la mémoire utilisée dans le microprocesseur selon la présente invention ;
la figure 8 représente un exemple de contenu de bloc mémoire selon la présente invention ; et
les figures 9A à 9D illustrent des variantes de signaux de commande réalisés selon la présente invention.

Ce microcontrôleur peut, par exemple, être celui commercialisé par la société SGS-Thomson Microelectronics sous l'appellation ST9.

Comme le représente la figure 6, le microcontrôleur comprend une unité centrale (CPU) 21 communiquant avec les divers composants du microcontrôleur par un bus 22. Ces divers composants sont notamment une mémoire morte (ROM) 23 et divers autres composants non représentés, tels qu'une mémoire vive RAM, une mémoire morte électriquement effaçable EEPROM, et des compteurs. Le microprocesseur est muni d'un mode de fonctionnement à accès direct en mémoire (DMA), symbolisé par le bloc 24. Ceci permet de commander un compteur 25 et un décodeur 26 associé à la ROM 23 pour permettre une lecture du contenu de cette ROM indépendamment du fonctionnement du CPU qui peut continuer à agir en relation avec les autres composants du microcontrôleur pendant des opérations de lecture de la ROM. Cet aspect sera exposé plus en détail ci-après.

La figure 7 illustre l'agencement en blocs de la mémoire ROM 23. Cette mémoire est agencée en p groupes de n blocs, respectivement désignés par les références B11 à B1n ... Bp1 à Bpn. Chaque groupe de blocs contient des données propres à assurer la commande d'un moteur asynchrone dans des conditions données, c'est-à-dire notamment pour une amplitude de tension de commande donnée. Chaque bloc d'un groupe de blocs contient une configuration correspondant aux signaux de commande à fournir pendant un incrément temporel donné.

Comme on le notera ci-après, la durée T′ d'un incrément temporel sera généralement un sous-multiple de la durée T d'un palier tel que susmentionné. Le nombre n de blocs dans un groupe de blocs est égal au nombre N de paliers, un même bloc pouvant être répété plusieurs fois pendant la durée d'un palier.

Le contenu d'un bloc particulier est indiqué à titre d'exemple en figure 8. Chaque bloc contient des mots agencés en colonnes. Dans l'exemple concerné, on veut fournir six signaux de commande. Les six premières colonnes correspondront donc chacune à un signal de commande g1... g6. (Comme il est usuel que les mémoires soient prévues pour des mots de huit bits, on a indiqué par des x deux bits supplémentaires de chaque mot qui peuvent être utilisés pour fournir des signaux de synchronisation permettant un masquage des instants de commutation lors de la mesure du courant moyen dans la charge ou permettant la mesure du déphasage tension/courant dans la charge.) Ainsi, chaque incrément d'un signal de commande contenu dans un bloc est lui-même quantifié en une suite de valeurs élémentaires, 42 dans l'exemple représenté. Comme on l'a vu précédemment, les bits de chaque mot peuvent être séquentiellement transférés sur un accès (port) de sortie du contrôleur et représenteront donc directement l'état du signal de commande désiré.

En figure 8, on a représenté à gauche, sur une échelle de temps verticale, un exemple de signaux g1 à g6 que l'on souhaite obtenir par les bits mémorisés dans un bloc Bij. Dans cet exemple, à l'instant de quantification 1, tous les bits du premier mot sont nuls. A l'instant de quantification 2 où l'on veut que les signaux g1, g3 et g5 passent à haut niveau, les bits 1, 3 et 5 sont mis à 1. Cet état se maintient jusqu'à l'instant de quantification 17 où le bit 5 est mis à zéro alors qu'à l'instant 18, le bit 6 est mis à 1. La mise à 0 simultanée des bits 5 et 6 à l'instant 17, au moment de la commutation des signaux g5 et g6, est destinée à éviter que, dans le pont de l'onduleur, deux signaux de commande soient simultanément à niveau haut. La même mise à zéro se produit à l'instant de quantification 23 pour les bits 3 et 4, à l'instant de quantification 38 pour les bits 1 et 2 et, comme on l'a vu précédemment, à l'instant de quantification 1 pour tous les bits. Ainsi, au niveau de six bits de poids faibles du port de sortie du microcontrôleur, on obtient les signaux g1 à g6 illustrés à gauche de la figure 8.

On a mentionné ci -dessus que les signaux g1 à g6 correspondaient aux signaux G1 à G6 de commande de commutateurs de l'onduleur. En fait, chacun des signaux g1 à g6 est fourni avec une périodicité spécifique de l'horloge interne du microcontrôleur commandant le compteur 25. Par exemple, si la période de cette horloge est de 5 microsecondes, la durée des signaux g1 à g6 sera de 42 fois 5 microsecondes soit environ 200 microsecondes. En se référant à la figure 2, on se rappelera que l'échantillonnage adopté pour les sinusoïdes est par exemple de N=24 points (ce qui correspond au nombre n de blocs dans un groupe de blocs). Ainsi, la lecture d'un groupe de blocs complet prendra une durée minimale de 200 x 24 microsecondes soit environ 5 ms. Ceci correspond à une fréquence de rotation du champ statorique du moteur de 200 Hz. Pour diminuer la vitesse de rotation, il est prévu selon la présente invention de répéter chaque signal élémentaire tel que les signaux g1 à g6 illustrés en figure 8 un certain nombre de fois avant de passer au bloc suivant d'un groupe de blocs donné. Par exemple, si l'on répète quatre fois une configuration du type de celle de la figure 8, dans le cas des valeurs numériques indiquées précédemment, la vitesse du moteur sera de 3000 tours/minute. Elle sera de 2000 tours/minute pour six répétitions de chaque bloc... Cette modification de vitesse de moteur est obtenue par programmation du microcontrôleur.

Par ailleurs, avec les valeurs numériques indiquées précédemment (42 octets par bloc et 24 blocs pour un groupe de blocs définissant complètement une configuration de signal de commande choisie), il faudra 24 x 42 soit environ 1000 octets de mémoire par groupe de blocs. Dans les applications usuelles, on ne cherche généralement pas à avoir plus de 3 à 8 valeurs de tensions de commande de moteur, ce qui signifie que l'on n'a besoin que de 3 à 8 kilooctets de mémoire ROM dans le CPU pour réaliser la fonction visée par la présente invention. Il s'agit là de valeurs tout à fait raisonnables, notamment dans le cas particulier du circuit ST9 susmentionné qui comprend soit une mémoire ROM soit une mémoire EPROM, c'est-à-dire une mémoire ROM électriquement programmable, d'une capacité de 8, 16 ou 32 kilooctets. Il restera donc dans cette mémoire des places disponibles pour l'exécution d'autres tâches par le microcontrôleur.

La présente invention permet une programmation particulièrement souple des signaux de commande d'un onduleur pour moteur asynchrone ou pour alimentation ininterruptible. Selon un aspect particulier de la présente invention, illustré en figure 9, alors que classiquement, avec les circuits de génération de signaux selon l'art antérieur tels que celui illustré en figure 4, on obtient des signaux de commande tels que décrits précédemment, et présentant tous pour les signaux g1, g3 et g5 des fronts montants à un même instant initial, il est possible selon la présente invention de modifier simplement la présentation des créneaux en gardant le même rapport cyclique pour chaque signal de commande élémentaire.

Des signaux de commande élémentaires classiques sont illustrés en figure 9A. Une première variante selon la présente invention est illustrée en figure 9B dans laquelle les créneaux sont centrés sur la durée d'un incrément temporel, ce qui limite les instants où plusieurs interrupteurs sont commandés simultanément. Dans le cas de la figure 9C, les créneaux sont centrés sur deux axes symétriques ce qui double la fréquence de commutation des interrupteurs de puissance. Les dispositions des figures 9B et 9C présentent des avantages pratiques quant à l'élimination des bruits de commutation de l'onduleur et donc des bruits résultant dans le moteur (sifflement) et à la réduction des pertes dans le moteur par la minimisation de l'énergie réactive stockée.

La figure 9D illustre une autre variante dans laquelle, chaque fois que les trois interrupteurs supérieurs sont conducteurs simultanément et qu'il n'y a donc pas de tension instantanée appliquée au moteur, on préfère les mettre dans leur état bloqué et rendre conducteur leur interrupteur adjacent. Ceci réduit les pertes de commutation dans le convertisseur à fréquence de commutation donnée, car un des bras du pont reste statique durant la durée de balayage de chaque bloc.

En outre, comme l'a vu précédemment, il est simple selon la présente invention de réaliser des temps morts entre les commutations de deux commutateurs d'une même branche de l'onduleur ce qui évite des défauts de fonctionnement de celui-ci, alors que, dans l'art antérieur, la réalisation de cette fonction entraînait une complexification du circuit de commande 12.

D'autres variantes apparaîtront à l'homme de l'art. On notera qu'il est très simple selon la présente invention de choisir et modifier la forme des signaux de commande élémentaires en choisissant et en modifiant le contenu des blocs mémoire susmentionnés.

## Revendications

1. Système de fourniture en parallèle de séquences de signaux de commande, chaque signal de commande ayant une durée déterminée (T), constante à l'intérieur d'une séquence, et un rapport cyclique prédéterminé spécifique de ce signal de commande, comportant un microcontrôleur (20) incorporant notamment une unité centrale (21), une mémoire non volatile (23) agencée en blocs (Bij) de lignes et colonnes, chaque ligne correspondant à un mot contenant au moins autant de bits qu'il y a de séquences en parallèle, chaque colonne ayant un rapport entre le nombre de bits à un premier état et le nombre de bits à un deuxième état correspondant audit rapport cyclique pour un signal de commande déterminé, caractérisé
en ce que le microcontrôleur (20) comporte des moyens d'accès direct en mémoire (DMA) associés à un compteur (25) permettant d'adresser séquentiellement à une cadence fixée chaque mot d'un bloc et de fournir en parallèle les bits de ce mot, et
en ce que le microcontrôleur est programmé pour répéter la lecture d'un bloc jusqu'à atteindre ladite durée déterminée pour un signal de commande avant de passer à la lecture répétitive d'un autre bloc, et ainsi de suite.

2. Système selon la revendication 1, caractérisé en ce que les signaux de commande sont destinés à un pont à plusieurs branches, chaque branche comprenant deux interrupteurs commandés en série (T1-T2, T3-T4, T5-T6), les deux interrupteurs d'une branche recevant des signaux sensiblement en opposition, les premiers interrupteurs de chaque branche recevant des signaux de commande dont le rapport cyclique varie entre une valeur maximale et une valeur minimale, les signaux appliqués à chaque branche étant déphasés.

3. Système selon la revendication 2, caractérisé en ce que, à l'intérieur de chaque colonne d'un bloc, les bits à un premier état sont centrés dans la colonne par rapport aux bits à un deuxième état.

4. Système selon la revendication 2, caractérisé en ce qu'à l'intérieur de chaque colonne d'un bloc, plusieurs groupes de bits à un premier état sont intercalés avec plusieurs groupes de bits au deuxième état, l'ensemble étant disposé de façon symétrique par rapport au centre de la colonne.

5. Système selon la revendication 2, caractérisé en ce qu'à l'intérieur de chaque bloc, quand tous les bits correspondant aux interrupteurs du même côté des différentes branches sont dans un même état, ils sont systématiquement mis dans un état déterminé.

6. Système selon la revendication 2, caractérisé en ce que les changements d'état des bits d'une colonne, et des bits de la colonne correspondant au signal de commande complémentaire sont séparés par un intervalle de mise à zéro.

7. Système selon la revendication 2, caractérisé en ce que chaque mot comprend des bits supplémentaires formant des colonnes supplémentaires utilisés comme bits de synchronisation.

## Patentansprüche

1. System zum Vorsehen paralleler Folgen von Steuersignalen, wobei jedes Steuersignal eine vorgegebene Dauer (T) hat, die innerhalb einer Folge konstant ist, und ein vorgegebenes Zyklusverhältnis hat, das für dieses Steuersignal spezifisch ist, mit einem Mikrocontroller (20), welcher im besonderen eine Zentraleinheit (21) aufweist, einem nicht flüchtigen Speicher (23), der in Blöcken (Bij) aus Zeilen und Spalten angeordnet ist, wobei jede Zeile einem Wort entspricht, welches wenigstens so viele Bits enthält, wie es parallele Folgen gibt, und jede Spalte ein Verhältnis zwischen der Anzahl der Bits auf einem ersten Zustand und der Anzahl der Bits auf einem zweiten Zustand aufweist, welches dem Zyklusverhältnis für ein vorgegebenes Steuersignal entspricht, dadurch **gekennzeichnet**, daß
der Mikrocontroller (20) Mittel zum direkten Zugreifen auf einen Speicher (DMA) aufweist, welche einem Zähler (25) zugeordnet sind, um mit einer festen Rate sequentiell jedes Wort eines Blockes zu adressieren und die Bits dieses Wortes parallel zu liefern, und
der Mikrocontroller so programmiert ist, daß er das Lesen eines Blockes wiederholt, bis die vorgegebene Dauer eines Steuersignals erreicht wird, bevor er zum wiederholten Lesen eines weiteren Blocks weitergeht, und dann so weiter.

2. System nach Anspruch 1, dadurch **gekennzeichnet**, daß die Steuersignale für eine Brücke mit mehreren Zweigen bestimmt sind, wobei jeder Zweig zwei seriell gesteuerte Schalter (T1-T2, T3-T4, T5-T6) aufweist, die beiden Schalter eines Zweiges im wesentlichen entgegengesetzte Signale empfangen, der erste Schalter jedes Zweiges Steuersignale empfängt, deren Zyklusverhältnis zwischen einem maximalen Wert und einem minimalen Wert variiert, und die an jeden Zweig angelegten Signale phasenverschoben sind.

3. System nach Anspruch 2, dadurch **gekennzeichnet,** daß innerhalb jeder Spalte eines Blocks die Bits auf einem ersten Zustand in der Spalte relativ zu den Bits auf einem zweiten Zustand zentriert sind.

4. System nach Anspruch 2, dadurch **gekennzeichnet**, daß innerhalb jeder Spalte eines Blockes mehrere Gruppen aus Bits auf einem ersten Zustand mit mehreren Gruppen aus Bits auf einem zweiten Zustand verschachtelt sind, wobei die Gesamtheit symmetrisch zur Mitte der Spalte angeordnet ist.

5. System nach Anspruch 2, dadurch **gekennzeichnet**, daß innerhalb jedes Blockes dann, wenn alle Bits, welche den Schaltern auf derselben Seite der verschiedenen Zweige entsprechen, auf demselben Zustand sind, diese automatisch auf einen vorgegebenen Zustand eingestellt werden.

6. System nach Anspruch 2, dadurch **gekennzeichnet**, daß die Veränderungen des Zustands der Bits einer Spalte und der Bits der Spalte, welche dem komplementären Steuersignal entspricht, durch ein Rücksetzintervall getrennt sind.

7. System nach Anspruch 2, dadurch **gekennzeichnet**, daß jedes Wort zusätzliche Bits aufweist, welche zusätzliche Spalten bilden, welche als Synchronisationsbits verwendet werden.

## Claims

1. A system for providing parallel sequences of control signals, each control signal having a determined duration (T), constant within a sequence, and a predetermined duty cycle specific to said control signal, comprising a microcontroller (20) comprising a central processing unit (21), a non volatile memory (23) arranged in blocks (Bᵢⱼ) of lines and columns, each line corresponding to a word containing at least as many bits as parallel sequences, each column having a ratio between the number of bits at a first state and the number of bits at a second state corresponding to said duty cycle for a determined control signal, characterized in that the microprocessor (20) includes:
direct memory access (DMA) means associated with a counter (25) sequentially addressing, at a fixed rate, each word of a block and supplying in parallel bits of said word, and
the microcontroller is programmed so as to repeat reading of a block until it reaches said determined duration of a control signal before processing the repetitive reading of another block, and so forth.

2. A system according to claim 1, characterized in that the control signals are intended for a multi-leg bridge, each leg comprising two serially controlled switches (T1-T2, T3-T4, T5-T6), the two switches of a leg receiving substantially opposite signals, the first switches of each leg receiving control signals, the duty cycle of which varies between a maximum and a minimum value, the signals applied to each leg being phase-shifted.

3. A system according to claim 2, characterized in that, inside each column of a block, the bits at a first state are centered in the column with respect to the bits at a second state.

4. A system according to claim 2, characterized in that, inside each column of a block, several groups of bits at a first state are intercalated with several groups of bits at the second state, the assembly being arranged symmetrically with respect to the center of the column.

5. A system according to claim 2, characterized in that, inside each block, when all the bits corresponding to the switches on the same side of the various legs are in equal state, they are automatically set to a determined state.

6. A system according to claim 2, characterized in that the changes of state of the bits in a column and of the bits of the column corresponding to the complementary control signal are separated by a reset interval.

7. A system according to claim 2, characterized in that each word comprises additional bits forming additional columns used as synchronization bits.
